# EUROPEAN PATENT SPECIFICATION

(11) **EP 0 427 564 B1**
(45) Date of publication and mention of the grant of the patent: **11.12.1996**
(21) Application number: 90312286.9
(22) Date of filing: 09.11.1990
(51) Int. Cl.: H04N 5/20, H04N 5/202, H04N 9/69

(54) **Video signal processing**
Videosignalverarbeitung
Traitement de signal vidéo

(30) Priority: 10.11.1989 GB 8925438; 19.09.1990 US 583881
(43) Date of publication of application: 15.05.1991
(73) Proprietor: RCA Thomson Licensing Corporation, Princeton New Jersey 08540 (US)
(72) Inventor: Haferl, Peter Eduard, CH-8134 Adliswil (CH); Sauder, Thomas Heinz, CH-8604 Volketswil (CH)
(74) Representative: Powell, Stephen David

(56) References cited:
- GB-A- 855 587
- JP-A- 1 206 775
- JP-A- 5 820 096
- PATENT ABSTRACTS OF JAPAN, vol. 8, no. 194 (E-264)[1631], 6th September 1984; & JP-A-59 81 978

## Description

The present invention concerns video signal processing.

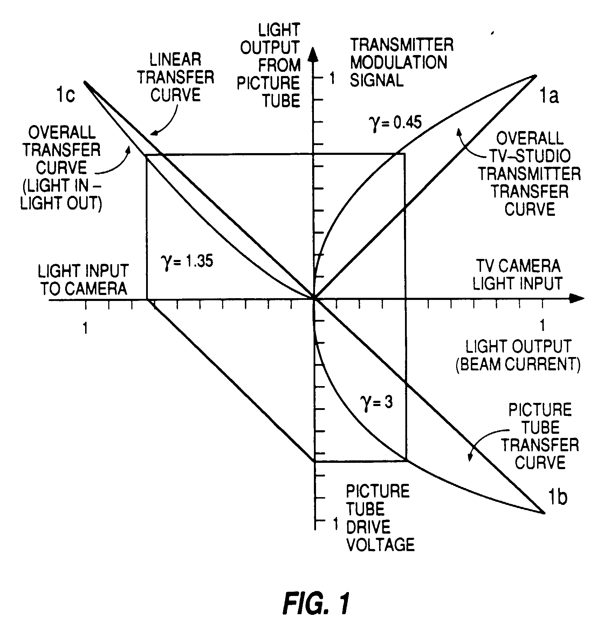

FIGURE 1 shows the gamma of various aspects of a video signal transmission system, with curve 1a representing the transfer characteristic of the transmission side, curve 1b representing the transfer characteristic of the picture tube (CRT), and curve 1c representing the overall transfer characteristic.

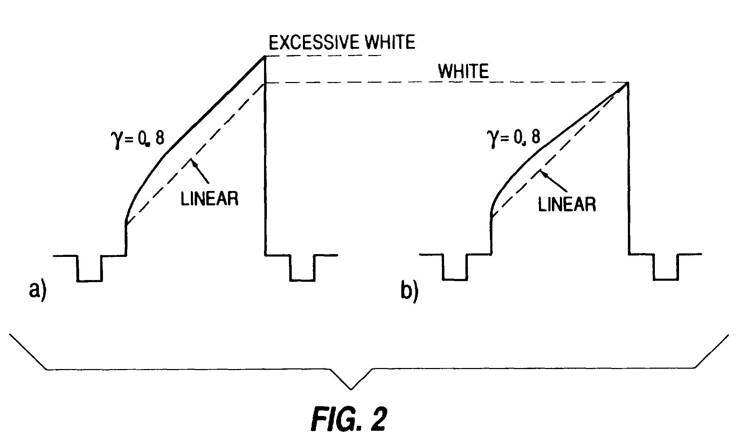

The transmitted video signals of the NTSC, PAL and SECAM television (TV) standards have a gamma of 0.45 to 0.5 while the picture tube of color television (CTV) receivers have a gamma of 2.8 to 3.1. As a result, the overall transfer curve (light in to the camera - light out from the picture tube) is not linear and the overall gamma is in practice about 1.35 instead of a unity gamma. This implies that the exponential transfer characteristic of the picture tube is not fully compensated, leading to compression of the dark picture portions of the display. Such compression causes picture details near black to be lost, and colored areas to fade to black. Concurrently, whites are excessively amplified with respect to the dark portions to the point of often reaching picture tube saturation and blooming. A linear overall transfer characteristic avoids this black compression and can be obtained by an additional gamma correction of 0.8 in each of the red, green, and blue (R, G, and B) amplifiers in the television receiver. However, picture tubes have a relatively small dynamic range of light output which cannot be enlarged without reaching picture tube saturation causing blooming. Therefore, gamma correction to increase amplification of dark image areas causes a signal compression of the high signal level whites. This is illustrated by Figure 2a showing a gamma corrected ramp signal. Peak white must be kept at the same level as in the uncorrected case, the dashed line to avoid picture tube blooming. As a consequence, the upper portion of the ramp signal has a reduced slope as shown in Figure 2b. The viewer perceives this as a lack of contrast in grey to white picture areas resulting in washed out pictures. In such an event, the improvement of contrast of low-brightness portions of the image is obtained at the expense of high-brightness contrast deterioration. Patent Abstracts of Japan, vol.7, no 99 (E-172) [1244] and JP-A-5820096 discloses an arrangement whereby a video signal is digitized by an A/D converter and then broken into a number of individual amplitude segments via digital comparators. Each amplitude segment is then individually filtered and multiplied by a fixed factor to produce respective output signals. The output signals are processed by respective gamma correction circuits and the resultant signals are summed to produce a final output signal. The disclosure of this document corresponds generally to the preambles system of claim 1 and method claim 11.

According to the present invention there is provided a video signal processing system and a video signal processing method as claimed in the characterising portions of claims 1 and 11.

In embodiments of the present invention, the perceived contrast of an image is improved by non-linear processing of the video signal. More specifically, a video signal is separated into a low level amplitude signal portion (near black) and a higher level amplitude signal portion (near white) for separate non-linear processing of each signal portion. The low-level amplitude signal portion is non-linearly processed and combined with the original linear signal. The higher level amplitude signal portion is non-linearly processed and high-pass frequency filtered, and combined with the original linear signal. The non-linearly processed low level amplitude signal portion and the non-linearly processed and high pass filtered high level amplitude signal portion are combined with the original linear signal to produce a gamma corrected video signal with enhanced detail signal contrast in the grey to white picture areas.

The invention will be described by way of example with reference to the drawings in which:

Figure 1, previously described, shows transfer characteristics of a transmitter, a television receiver, and the overall television system including the transmitter and receiver.

Figure 2, previously described, shows a graphical representation of a ramp signal which has undergone gamma correction useful in understanding an advantage of the arrangement of Figures 3 and 4.

Figure 3 shows a block diagram representation of an exemplary arrangement according to an aspect of the present invention.

Figure 4 shows a more detailed block diagram representation of the arrangement of Figure 3 according to an aspect of the present invention.

Figures 5 and 6 show time and frequency domain waveforms respectively, useful in understanding the operation of the arrangement of Figures 3 and 4.

FIGURE 7 shows a detailed schematic diagram of a circuit implementation of the arrangement of FIGURE 4 according to another aspect of the present invention.

FIGURE 8 shows a detailed schematic diagram of the preferred circuit implementation of the arrangement of FIGURE 4 according to still another aspect of the present invention.

In the figures, corresponding elements are identified by the same reference numbers.

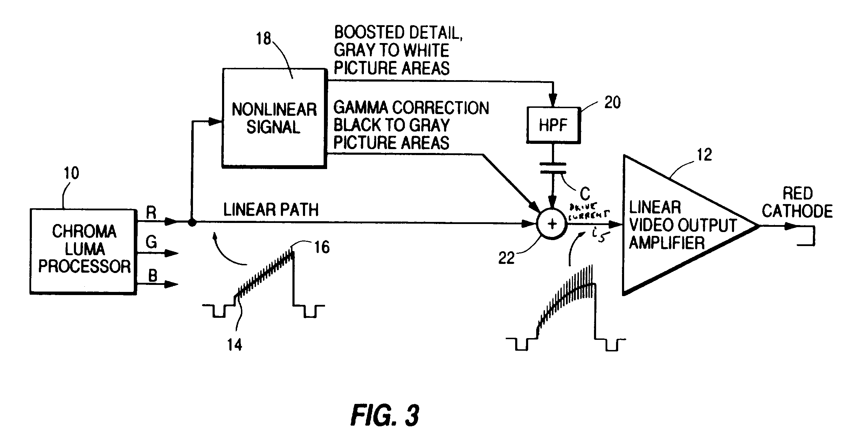

FIGURE 3 shows a block diagram representation of the subject arrangement coupled between a luminance-chrominance processor 10 and a video output amplifier 12 of a color television receiver. While similar arrangements are used in the green (G) and blue (B) channels, only the arrangement for the red (R) channel is shown. The R output signal of processor 10 is shown by way of example to be linear ramp 14 with a superimposed detail signal 16 indicated by the short vertical lines. The detail signals 16 are video signals at frequencies higher than 0.5 MHz and correspond to picture details smaller than 1.2 cm in the horizontal direction on a 28 inch screen size color television receiver.

The R signal is coupled to a non-linear or soft signal splitter 18 which "gradually" splits the signal into a low level portion (black to grey picture area) and a high level portion (grey to white picture areas). The high level signal portion is filtered by a high-pass filter 20 which can include capacitor C. The low level signal is DC coupled to an adder 22. The high pass filtered portion of the high level signal is AC coupled to adder 22 through capacitor C. The original R signal, the low level signal portion and the high-pass filtered high level portion are combined by adder 22 to produce the output signal coupled to amplifier 12. The addition of the low level portion (black to grey) to the R signal provides gamma correction. The further addition of the high-pass filtered portion results in contrast enhancement of the high level (grey to white) video detail signal.

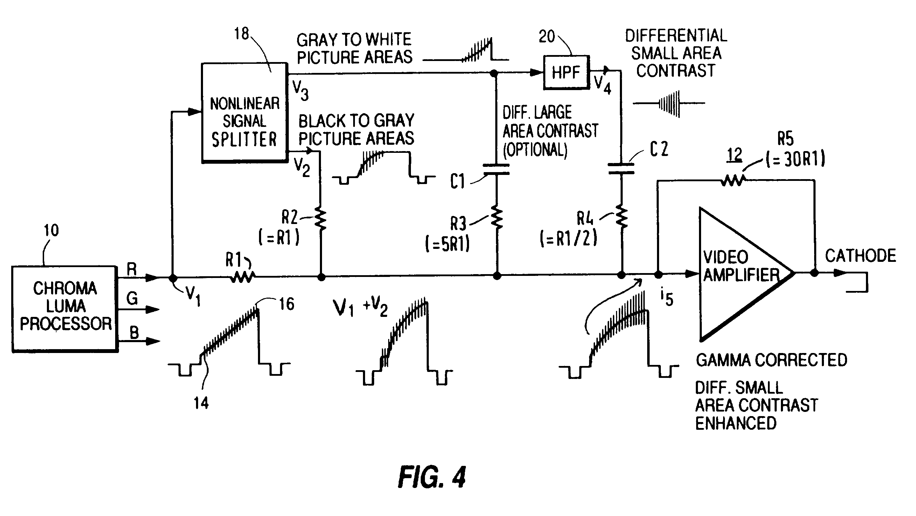

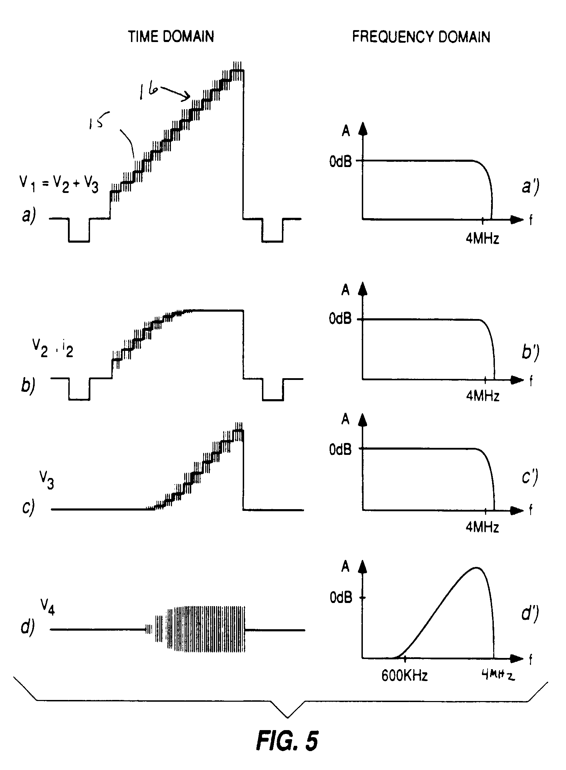

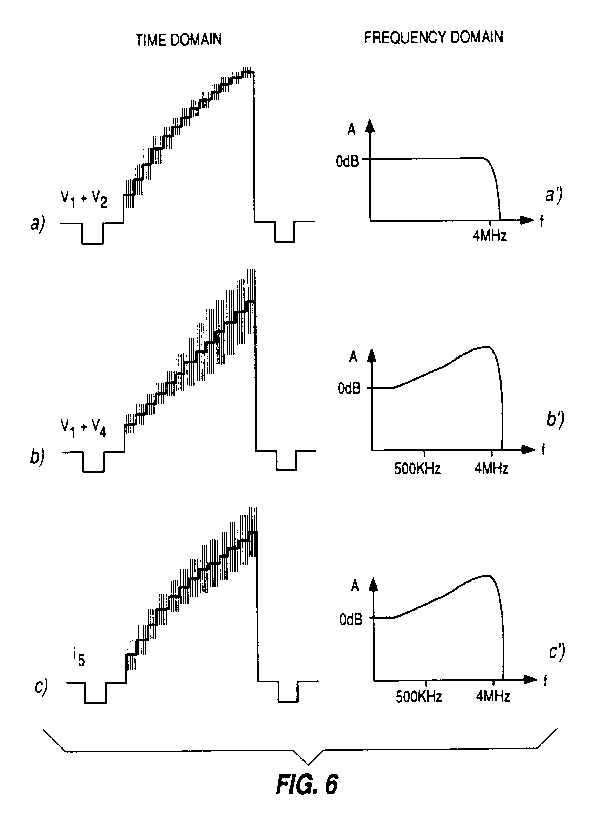

FIGURE 4 shows the arrangement of FIGURE 3 in greater detail. The waveforms of FIGURES 5 and 6 help illustrate the operation of the arrangement of FIGURE 4. Waveform 5a shows the input signal V₁ composed of a staircase 15 and a superimposed detail signal 16 at about 2MHz. Waveforms 5b and 5c show the "soft" signal splitting performed by nonlinear signal splitter 18. Note that the differential amplitude of V₂ gradually decreases and that of V₃ gradually increases. The sum of V₂ and V₃ equals the input voltage V₁. The frequency response of the signal splitting is flat as shown by the corresponding frequency response curves of FIGURES 5a'-c'. Video output amplifier 12 is driven by voltages V₁ and V₂ via respective resistors, R1 and R2, where R2 has a value equal to that of R1. The decreasing differential amplitude of V₂ represents a gradual variation of gain of video output amplifier 12 from 60 to 30 corresponding to a gamma of 0.8. This is illustrated in FIGURE 6a and a' showing the sum of V₁ and V₂ The differential amplitude (contrast) decreases gradually toward higher signal levels. A high frequency detail signal V₄ is derived by passing V₃ through a high-pass filter 20. The output voltage and the frequency response of V₄ is illustrated by FIGURES 5d and 5d'. Voltage V₄ is coupled capacitively (through capacitor C2) to video amplifier 12 for producing the signal V₁ + V₄ shown in FIGURE 6b and 6b'. A 6 dB boost of the detail signal is obtained by the relatively low value coupling resistor R4 (value = R1/2). Coupling capacitor C2 prevents any brightness signal (DC component) from being added to the input of video amplifier 12. FIGURE 6c and 6c' illustrate the drive current i₅ which is similar to the inverted amplifier 12 output voltage. The low frequency staircase signal of FIGURE 6c is similar to that of FIGURE 6a but the detail signal is strongly boosted to obtain an enhanced contrast of picture details in bright areas. The average beam current does not increase significantly due to the AC coupling. A small amount of V₃ is also added through coupling capacitor C1 and resistor R3 (value = 5R1) to avoid color desaturation in large, bright picture areas.

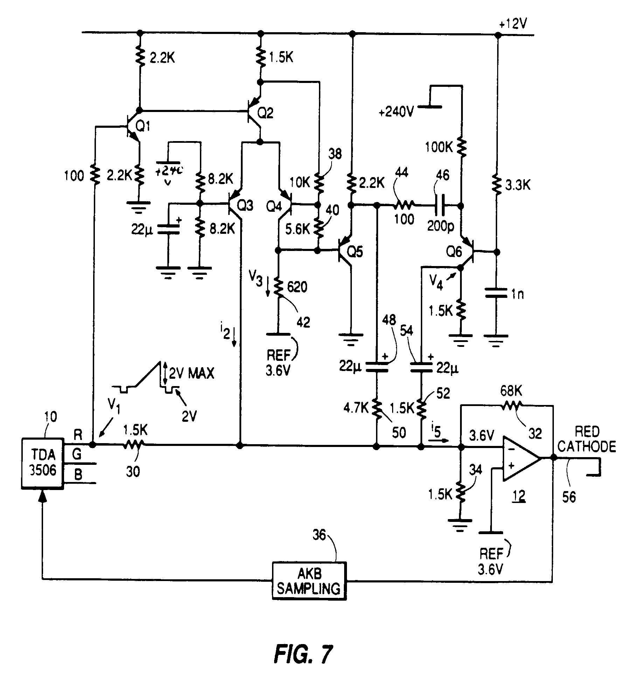

FIGURE 7 shows a schematic of an exemplary nonlinear signal processor according to the present invention. RGB processor 10, integrated circuit TDA3506 manufactured by, e.g., the Philips Corporation of the Netherlands, drives video output amplifier 12 via resistor 30. Feedback resistor 32 defines the gain of the amplifier 12. The spot cut-off voltage of the picture tube is set to 150 volts by biasing resistor 34 for the condition when drive current i₅ is equal to zero. This condition requires an appropriate CRT grid number 2 adjustment (not shown). Automatic kinescope biasing (AKB) circuit 36 sets the black levels of the outputs of processor 10 such that i5 is zero for a black signal. The bias current of Q3 flows through resistor 30 into processor 10 and causes a black level of 2 volts as indicated at V1.

Transistor Q1 is a unity gain inverter and DC level shifter. Differential amplifier Q2, Q3 and Q4 provide the signal splitting as shown by the waveforms of FIGURE 5b and 5c. The bases of Q3 and Q4 are biased so that for a signal corresponding to a black image, Q3 is conducting and Q4 is cut off. Current source Q2 inverts the signal so that current i₂ is in phase with voltage V₁.

The increasing ramp voltage V₁ generates an increasing ramp current i₂ which adds to the drive current i₅ into amplifier 12 and produces the gamma correction. Current i₂ is of same shape as voltage V₂ of FIGURE 5b. The emitter voltage of Q2 is coupled to the base of Q4 via resistor 38. The increasing voltage V₁ causes the emitter voltage of Q2 to decrease and the base voltage of Q4 decreases until Q4 starts conducting. As a result, voltage V3 of FIGURE 5c gradually increases and the slope of V₂ gradually decreases. Feedback resistor 40 provides a smooth changeover of the collector current of Q2 between Q3 to Q4 as shown by waveforms 5b and 5c. A further increase of V₁ causes i₂ to remain constant and V₃ to increase at the same rate as V₁. This is obtained with Q4 having a gain of one due to the values of resistors 38, 40 and 42.

The separated medium to high level signal V₃ developed across resistor 42 is fed to emitter follower Q5 which drives a high-pass filter including a resistor 44 and a capacitor 46. A small amount of V₃ signal is fed to the output amplifier 12 via a capacitor 48 and a resistor 50. As earlier noted, this AC coupled wide band signal improves color saturation in bright picture areas which otherwise would be slightly desaturated due to signal compression caused by gamma correction. The medium to high level detail signal voltage V₄ is amplified by an amplifier including transistor Q6 to obtain a 6 dB boosted detail signal. The detail signal is coupled to the output amplifier 12 via a capacitor 54 and a resistor 52. Also as earlier noted, the advantage of the AC coupling is improved brilliance (contrast of details) without increasing the average beam current and without changing the black level.

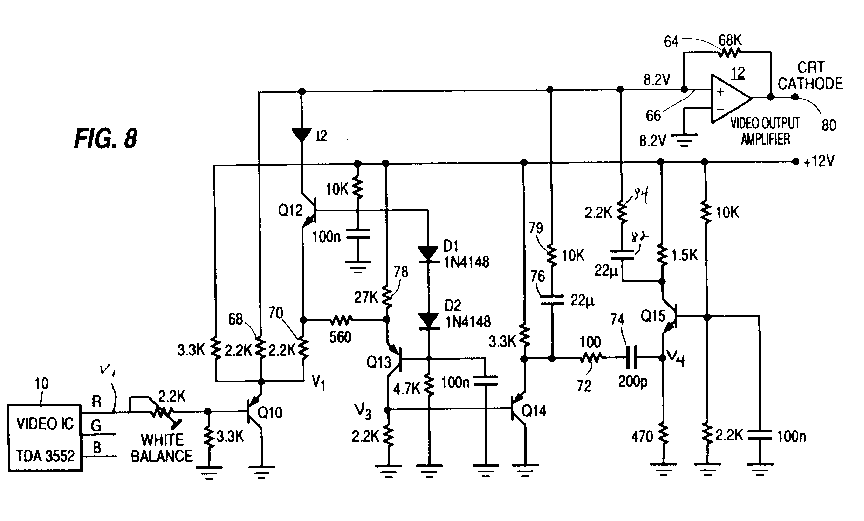

FIGURE 8 shows the circuit diagram of the preferred embodiment of a non-linear video processor according to the present invention using a TDA3552 integrated circuit as signal source 10. The circuit employs an active-load video output amplifier as amplifier 12. Voltage feedback is provided via resistor 64 to obtain a low impedance summing point at its input 66.

An input emitter follower Q10 acts as low impedance source for video voltage V₁. The differential pair Q12, Q13 splits the video voltage V₁ into the low and high brightness signals I₂ and V₃. Transistor Q12 fully conducts at signal levels corresponding to very low image brightness. Thus, resistors 68 and 70 are coupled in parallel causing output amplifier 12 to produce a gain of 60. The signal splitting of this circuit produces a drive current I₂ in place of voltage V₂ shown in FIGURE 4.

Transistor Q12 conducts less as V₁ increases, and a gain of 30 is reached when transistor Q12 is cut off. The gradual change of gain of the output amplifier, as effected by I₂, produces the desired gamma correction. Transistor Q13 starts to conduct before transistor Q12 goes into cut-off at a medium brightness signal level and produces voltage V₃ at its collector. Voltage V₃ represents picture information containing brightness levels between grey and peak white. Signal voltage V₃ is applied to emitter follower Q14 driving a high-pass filter including resistor 72 and capacitor 74. This high-pass filter separates the signal V₄ corresponding to grey to white area detail signal used for contrast enhancement. Signal V₄ is amplified by transistor Q15 to produce a detail signal which is coupled to amplifier 12 via capacitor 82 and resistor 84. As mentioned earlier, a small amount of the V₃ signal is AC fed directly to output amplifier 12 via capacitor 76 and resistor 79.

The bases of transistors Q12 and Q13 are biased at fixed relative potentials established by diodes D1 and D2. A resistor 78 produces a quiescent current of 0.3 mA through transistor Q13, preventing transistor Q13 from being cut off by signal peaks at grey level.

The spot cut-off voltage of the picture tube (not shown) is set to approximately 160 V at the cathode 80 by setting the black level voltage at the emitter of transistor Q10 to 3.5 volts, and by appropriately adjusting the grid No. 2 voltage of the CRT.

The present circuit does not require alignment between the RGB channels to avoid tracking errors. This is due to the gradual signal splitting.

The present arrangement makes use of the fact that the eye appears to be more sensitive to contrast changes in small picture areas, as opposed to changes extending over large areas. Frequencies produced by picture details of medium to high brightness are boosted and AC coupled to the main video signal. This results in a significant improvement of the brilliance without increasing the average beam current. The AC coupling only increases the so-called detail contrast, while DC brightness signals and large area contrast are not affected. The picture tube can be driven to higher beam currents during small area details than during large area signals before picture tube blooming occurs. This improvement of brilliance is of particular importance with very large picture tubes which appear dimmer and less contrasty than smaller tubes because the large tubes are limited by gun, shadow mask, and phosphor to about the same peak beam currents as the smaller tubes while the picture is spread out over a much larger area.

## Claims

1. A video signal processing system comprising
a source (10) of an input video signal (V1); and
non-linear processing means (18,20,C2) for processing said input video signal (V1) to produce an output video signal (i₅), said non-linear processing means being characterized by:
a) means (18) for gamma correcting at least the low frequency black to grey picture area components of said input video signal (V1), to obtain a first signal (V1 + V2) ;
b) means (18,20,C2) for amplifying the high frequency components of grey to white portions of said input video signal (V1) for obtaining a second signal (V4); and
c) means (22) for combining said first and second signals to produce said output video signal.

2. The video processing system according to claim 1, wherein said non-linear processing means (18,20,C2) comprises
means for splitting the relatively low amplitude portion and the relatively high amplitude portion of said input video signal and coupling the relatively low amplitude portion of said input video signal to said gamma correcting means and coupling the relatively high amplitude portion of said input video signal to said amplifying means.

3. A system according to claim 2, wherein the splitting means (18) comprises means (Q2,Q3; Q10,Q12) which applies decreasing gain to the first signal portion with increasing amplitude thereof for effecting the said gamma correction.

4. A system according to claim 2 or 3, wherein the deriving means (18,20) comprises means (Q4; Q13,Q14) which applies increasing gain to the second signal portion with increasing amplitude thereof and means (20) for high pass filtering the second signal portion to enhance the high frequency component (V4) of the second signal portion.

5. The apparatus of claim 2, 3 or 4, wherein the combining means comprises an adder.

6. The apparatus of claim 2, 3, 4 or 5, wherein said first signal portion (V2) is DC coupled (R2) to said means for combining (R1,R2,R4).

7. The apparatus of claim 2, 3, 5, 5 or 6, wherein said enhanced high frequency component (V4) is AC coupled (C2) to said means for combining (R1, R2,R4).

8. The apparatus of any one of claims 2 to 7, wherein at least a portion of said second signal portion (V3) is AC coupled (C1) to said means for combining.

9. The apparatus of any one of claims 2 to 8, wherein said splitting means (18) gradually divides said input video signal (V1) into said first (V2) and second (V3) signal portions.

10. The apparatus of any preceding claim, wherein said input video signal (V1) is a red, green or blue video signal.

11. A method of processing an input video signal (V1) derived from a source (10) comprising the step of non-linearly processing (18,20,C2) said input video signal (V1) to produce an output video signal (i₅), said non-linear processing step characterized by the further steps of
a) gamma correcting at least the low frequency black to grey picture area components of said input video signal (V1) to obtain a first signal (V1 + V2);
b) amplifying the high frequency components of grey to white portion of said input video signal (V1) for obtaining a second signal (V4);
c) combining (22) said first and second signals to produce said output video signal.

12. A method according to claim 11, further comprising combining a portion of the high amplitude signal portion with the input video signal (V1).

## Patentansprüche

1. Videosignal-Verarbeitungssystem, umfassend:
eine Quelle (10) für ein Video-Eingangssignal (V1); und
nicht lineare Verarbeitungsmittel (18, 20, C2) zur Verarbeitung des Video-Eingangssignals (V1), um ein Video-Ausgangssignal (i₅) zu erzeugen, wobei die nicht linearen Verarbeitungsmittel gekennzeichnet sind durch:
a) Mittel (18) zur Gamma-Korrektur wenigstens der Niederfrequenz-Schwarz-zu-Grau-Bildbereichs-Komponenten des Video-Eingangssignals (V1), um ein erstes Signal (V1 + V2) zu erhalten;
b) Mittel (18, 20, C2) zur Verstärkung der Hochfrequenz-Komponenten der Grau-zu-Weiß-Teile des Video-Eingangssignals (V1), um ein zweites Signal (V4) zu erhalten; und
c) Mittel (22) zum Kombinieren des ersten und zweiten Signals, um das Video-Ausgangssignal zu erzeugen.

2. Videosignal-Verarbeitungssystem nach Anspruch 1, bei dem die nicht linearen Verarbeitungsmittel (18, 20, C2) umfassen:
Mittel zum Aufspalten des Teils des Video-Eingangssignals mit relativ niedriger Amplitude und des Teils mit relativ hoher Amplitude, um zum Zuführen des Teils des Video-Eingangssignals mit der relativ niedrigen Amplitude zu den Gamma-Korrekturmitteln, und zum Zuführen des Teils des Video-Eingangssignals mit der relativ hohen Amplitude zu den Verstärkungsmitteln.

3. System nach Anspruch 2, bei dem die Aufspaltmittel (18) Mittel (Q2, Q3; Q10, Q12) umfassen, die dem ersten Signalteil eine abnehmende Verstärkung bei zunehmender Amplitude von ihm auferlegen, um die Gamma-Korrektur zu bewirken.

4. System nach Anspruch 2 oder 3, bei dem die Ableitmittel (18, 20) Mittel (Q4; Q13, Q14) umfassen, die dem zweiten Signalteil eine zunehmende Verstärkung bei zunehmender Amplitude von ihm auferlegen, und Mittel (20) zur Hochpaßfilterung des zweiten Signalteils, um die Hochfrequenz-Komponente (V4) des zweiten Signalteils zu vergrößern.

5. Vorrichtung nach Anspruch 2, 3 oder 4, bei der die Kombiniermittel eine Addierstufe umfassen.

6. Vorrichtung nach Anspruch 2, 3, 4 oder 5, bei der der erste Signalteil (V2) mit den Kombiniermitteln (R1, R2, R4) gleichstrommäßig gekoppelt ist.

7. Vorrichtung nach Anspruch 2, 3, 4, 5 oder 6, bei der die vergrößerte Hochfrequenzkomponente (V4) mit den Kombiniermitteln (R1, R2, R4) wechselstrommäßig gekoppelt (C2) ist.

8. Vorrichtung nach einem der Ansprüche 2 bis 7, bei der wenigstens ein Teil des zweiten Signalteils (V3) wechselstrommäßig (C1) mit den Kombiniermitteln gekoppelt ist.

9. Vorrichtung nach einem der Ansprüche 2 bis 8, bei der die Aufspaltmittel (18) allmählich das Video-Eingangssignal (V1) in den ersten (V2) und in den zweiten (V3) Signalteil teilen.

10. Vorrichtung nach einem der vorhergehenden Ansprüche, bei der das Video-Eingangssignal (V1) ein rotes, grünes oder blaues Videosignal ist.

11. Verfahren zur Verarbeitung eines Video-Eingangssignals (V1), das von einer Quelle (10) abgeleitet wird, umfassend den Schritt einer nicht linearen Verarbeitung (18, 20, C2) des Video-Eingangssignals (V1), um ein Video-Ausgangssignal (i₅) zu erzeugen, wobei der nicht lineare Verarbeitungsschritt durch die weiteren Schritte gekennzeichnet ist:
a) Gamma-Korrektur wenigstens der niederfrequenten Schwarz-zu-Grau-Bildbereichs-Komponenten des Video-Eingangssignals (V1), um ein erstes Signal (V1 + V2) zu erhalten;
b) Verstärkung der hochfrequenten Komponenten des Grau-zu-Weiß-Teils des Video-Eingangssignals (V1), um ein zweites Signal (V4) zu erhalten;
c) Kombinieren (22) des ersten und zweiten Signals, um das Video-Ausgangssignal zu erzeugen.

12. Verfahren nach Anspruch 11, das ferner das Kombinieren eines Teils des Signalteils mit hoher Amplitude mit dem Video-Eingangssignal (V1) umfaßt.

## Revendications

1. Dispositif de traitement d'un signal vidéo comprenant :
une source (10) d'un signal vidéo entrant (V1) ; et
des moyens de traitement non linéaires (18,20, C2) pour traiter ledit signal vidéo entrant (VI) en vue de produire un signal vidéo de sortie (i₅), lesdits moyens de traitement non linéaires étant caractérisés par :
a) des moyens (18) pour corriger en gamma au moins les composantes basse fréquence des zones d'image noires et grises dudit signal vidéo entrant (V1) pour obtenir un premier signal (V1 + V2) ;
b) des moyens (18, 20, C2) pour amplifier les composantes haute fréquence des parties grises à blanches dudit signal vidéo entrant (V1) afin d'obtenir un second signal (V4) ; et
c) des moyens (22) pour combiner lesdits premier et second signaux en vue de générer ledit signal vidéo de sortie.

2. Dispositif de traitement vidéo selon la revendication 1, dans lequel lesdits moyens de traitement non linéaires (18, 20, C2) comprennent :
des moyens pour séparer la partie d'amplitude relativement faible et la partie d'amplitude relativement haute dudit signal vidéo entrant et coupler la partie d'amplitude relativement faible dudit signal vidéo entrant auxdits moyens de correction en gamma et coupler la partie d'amplitude relativement haute dudit signal vidéo entrant auxdits moyens d'amplification .

3. Dispositif selon la revendication 2, dans lequel les moyens de séparation (18) comprennent des moyens (Q2, Q3 ; Q10, Q12) qui appliquent un gain décroissant à la partie de premier signal dont l'amplitude croît pour effectuer ladite correction en gamma.

4. Dispositif selon la revendication 2 ou 3, dans lequel les moyens de dérivation (18,20) comprennent des moyens (Q4; Q13, Q14) qui appliquent un gain croissant à la partie de second signal dont l'amplitude croît et des moyens (20) pour filtrer passe-haut la partie de second signal afin d'augmenter la composante haute fréquence (V4) de la partie de second signal.

5. Dispositif selon la revendication 2, 3 ou 4, dans lequel les moyens de combinaison comprennent un additionneur .

6. Dispositif selon la revendication 2,3, 4 ou 5, dans lequel ladite première partie de signal (V2) présente un couplage ohmique (R2) avec lesdits moyens de combinaison (R1, R2, R4).

7. Dispositif selon la revendication 2, 3, 5, 5 ou 6 , dans lequel ladite composante haute fréquence augmentée (V4) présente un couplage alternatif (C2) avec lesdits auxdits moyens de combinaison (R1, R2, R4).

8. Dispositif selon l'une quelconque des revendications 2 à 7, dans lequel au moins une fraction de ladite seconde partie de signal (V3) présente un couplage alternatif (C1) avec lesdits moyens de combinaison .

9. Dispositif selon l'une quelconque des revendications 2 à 8, dans lequel lesdits moyens de séparation (18) divisent progressivement ledit signal entrant (V1) en lesdites première (V2) et seconde (V3) parties de signal.

10. Dispositif selon l'une quelconque des revendications précédentes , dans lequel ledit signal entrant (V1) est un signal vidéo rouge, vert ou bleu.

11. Procédé de traitement d'un signal vidéo entrant (V1) dérivé d'une source (10) comprenant l'étape consistant à traiter de façon non linéaire (18,20, C2) ledit signal vidéo entrant (V1) pour produire un signal vidéo de sortie (i₅), ladite étape de traitement non linéaire étant caractérisée par les étapes supplémentaires consistant à :
a) corriger en gamma au moins les composantes basse fréquence des zones d'image noires et grises dudit signal vidéo entrant (V1) pour obtenir un premier signal (V1 + V2);
b) amplifier les composantes haute fréquence de la partie grise et blanche dudit signal vidéo entrant (V1) pour obtenir un second signal (V4) ;
c) combiner (22) lesdits premier et second signaux pour produire ledit signal vidéo de sortie .

12. Procédé selon la revendication 11, consistant de plus à combiner une fraction de la partie de signal d'amplitude élevée avec le signal vidéo entrant (V1).
